# EUROPÄISCHE PATENTSCHRIFT

(11) **EP 1 205 513 B1**
(45) Veröffentlichungstag und Bekanntmachung des Hinweises auf die Patenterteilung: **28.12.2005**
(21) Anmeldenummer: 01123325.1
(22) Anmeldetag: 08.10.2001
(51) Int. Cl.: C08J 11/06, B29B 17/02

(54) **Verfahren zum Entlackieren von mit Lackschichten versehenen Kunststoffkörpern**
Process for delacquering of lacquer coated plastic articles
Procédé pour le décapage d'articles polymères portant une couche de revêtement

(30) Priorität: 24.10.2000 DE 10052597
(43) Veröffentlichungstag der Anmeldung: 15.05.2002
(73) Patentinhaber: Wiedemann, Peter, 86633 Neuburg-Ried (DE)
(72) Erfinder: Wiedemann, Peter, 86633 Neuburg-Ried (DE)
(74) Vertreter: Witzany, Manfred

(56) Entgegenhaltungen:
- EP-A- 0 575 751
- EP-A- 0 872 281
- DE-A- 4 344 582

## Beschreibung

Die Erfindung betrifft ein Verfahren zum Entlackieren von Kunststoffkörpern gemäß dem Oberbegriff des Patentanspruchs 1.

Aus der DE 43 44 582 A1 ist ein Verfahren zum Entschichten von lackierten Kunststoffteilen bekannt. Bei diesem Verfahren werden die Kunststoffteile zunächst mechanisch zerkleinert und anschließend gemeinsam mit alkalisiertem Glykol bei erhöhter Temperatur zusammen mit chemisch beständigen Scheuerpartikeln umgewälzt. Das alkalisierte Glykol bringt dabei den Lack zum Quellen, so daß sein Haftvermögen auf den Kunststoffteilen entsprechend reduziert ist. Durch das Umwälzen der Kunststoffteile zusammen mit den Scheuerpartikeln wird der gequollene Lack von den Kunststoffteilen abgeschabt, wonach die Kunststoffteile mit Wasser gespült, getrocknet und von den abgeschabten Lackpartikeln getrennt werden. Dieses bekannte Verfahren erzielt für die meisten gängigen Lackschichten eine ausreichende Entlackierung. Jedoch hat sich als nachteilig herausgestellt, daß die erforderliche Umwälzzeit nur durch energieaufwendiges Erhitzen des Entlackierungsmittels auf Temperaturen zwischen 80°C und 100°C in vertretbaren Grenzen gehalten werden kann, wobei eine im Verhältnis zur Kunststoffschüttung beträchtliche Entlakkierungsmittelmenge erforderlich ist. Dies liegt insbesondere daran, daß gängige Entlackierungsmittel, insbesondere alkalisiertes Glykol nur eine sehr schlechte Benetzung der Lackoberfläche erzielen, wodurch sich die effektive Einwirkdauer des Entlackierungsmittels auf die Lackschichten gegenüber der tatsächlichen Prozeßdauer erheblich reduziert. Außerdem besitzen die in diesem bekannten Verfahren erforderlichen Scheuerpartikel eine beträchtliche Größe, so daß sie mit beträchtlichem Aufwand vollständig von den entlackierten Kunststoffteilen getrennt werden müssen, wenn man die Qualität der aus diesen Kunststoffteilen erstellten neuen Kunststoffkörper nicht beeinträchtigen will. Um die entlackierten Kunststoffteile vom Entlackierungsmittel zu trennen schlägt dieses bekannte Verfahren vor, die Kunststoffteile mit Wasser zu spülen und anschließend zu trocknen. Dadurch werden entsprechend große Wassermengen benötigt. Außerdem ist durch diese Behandlungsweise der erforderliche Trocknungsprozeß sehr energieaufwendig.

Der Erfindung liegt die Aufgabe zugrunde, ein Verfahren der eingangs genannten Art zu schaffen, bei dem der erforderliche Energieaufwand zum Entlackieren von lackierten Kunststoffteilen verringert ist.

Diese Aufgabe wird erfindungsgemäß mit den Merkmalen des Patentanspruchs 1 gelöst.

Bei dem Verfahren gemäß Anspruch 1 werden die mit Lackschichten versehenen Kunststoffkörper, die vorzugsweise aus thermoplastischem Kunststoff bestehen, zunächst auf eine schüttfähige Teilegröße zerkleinert, wobei vorzugsweise wenigstens 90 Gewichtsprozent aller Teile nach dem Zerkleinern eine Gesamtlänge von weniger als 20 cm aufweisen. Damit wird der zu entlackierende Kunststoffkörper zerstört. Dieses Zerkleinern hat jedoch den Vorteil, daß auf die erzeugten, schüttfähigen Teile die aus der Schüttguttechnik bekannten Transport- und Bearbeitungsmaßnahmen problemlos anwendbar sind. Außerdem weist die überwiegende Mehrzahl zu entlackierender Kunststoffkörper Defekte auf, die eine direkte Wiederverwendung des gesamten Kunststoffkörpers verhindern. Die Teilegröße wird jedoch größer als etwa 3 mm, vorzugsweise größer als 10 mm gewählt, um die Oberflächenvergrößerung der Kunststoffteile durch das Zerkleinern gering zu halten. Dadurch kann die erforderliche Menge an Chemikalien, die zum Benetzen der Oberfläche der Kunststoffteile erforderlich ist, klein gehalten werden. Durch das erfindungsgemäße Verfahren soll die Kunststoffmasse des Kunststoffkörpers lackfrei wiedergewonnen werden, um daraus mit bekannten Verfahren neue Kunststoffkörper erstellen und gegebenenfalls lackieren zu können, ohne daß daran haftende Lackschichten hinderlich sind. Da Kunststoffkörper vielfach mit duroplastischen Lacken beschichtet sind, ist ein direktes Auflösen der Lackschicht praktisch unmöglich, da in diesem Fall die Vernetzung des Lackpolymers aufgebrochen werden müßte. Damit wären jedoch Chemikalien erforderlich, die gegebenenfalls auch die themoplastischen Kunststoffteile selbst angreifen, was jedoch vermieden werden sollte. Deshalb wird den schüttfähigen Kunststoffteilen ein Entlackierungsmittel zugesetzt und mit diesem umgewälzt, das ein Aufquellen der Lackschicht und damit eine Verminderung ihrer Haftfähigkeit an den Kunststoffteilen bewirkt. Nach ausreichender Einwirkung des Entlakkierungsmittels ist die Haftung der Lackschicht so weit reduziert, daß diese von den Kunststoffteilen leicht abgeschlagen werden kann.

Nach erfolgter Einwirkung des Entlackierungsmittels auf die Lackschichten der Kunststoffteile wird dieses zur weiteren Prozeßführung nicht mehr benötigt. Zusätzlich stört es das anschließende Abschlagen der Lackschichten von den Kunststoffteilen, da es Schläge entsprechend dämpft. Außerdem besteht grundsätzlich die Gefahr, daß das Entlackierungsmittel nachfolgende Bearbeitungsvorrichtungen schädigen könnte. Es ist daher günstig, das Entlackierungsmittel nach erfolgter Einwirkung auf die Kunststoffteile von diesen zu trennen. Zwar ist es grundsätzlich denkbar, die Kunststoffteile mit einem einfachen Lösungsmittel, insbesondere Wasser zu waschen, dies erfordert jedoch einen sehr hohen Wasser- und Energieeinsatz zum anschließenden Trocknen der Kunststoffteile. Einfacher und effizienter ist es dagegen, wenn die Trennung zwischen dem Entlackierungsmittel und den lackierten Kunststoffteilen durch Zugabe eines Flüssigkeit aufsaugenden Feststoffs zu den Kunststoffteilen erfolgt. Dieser Feststoff kann sehr leicht beispielsweise durch Sieben von den Kunststoffteilen getrennt werden, ohne daß hierbei ein nennenswerter Energieaufwand erforderlich wäre. Da das Entlackierungsmittel im inneren des Feststoffs gespeichert wird, können auch chemisch aggressive Entlakkierungsmittel eingesetzt werden, ohne nachfolgende Bearbeitungseinrichtungen durch Entlackierungsmittelreste zu schädigen.

Um den für die Entlackierung erforderlichen Energieeinsatz möglichst niedrig zu halten, wird gemäß Anspruch 2 als Entlackierungsmittel erfindungsgemäß eine Emulsion aus mindestens einem benzylsubstituierten Alkanol, einem Alkyl-Glykol-Acetat und/oder einem N-Alkylpyrolidon mit einer wässerigen Lauge eingesetzt, die sich nicht vollständig mischen lassen. Das Mischungsverhältnis dieser Substanzen wird dabei so gewählt, daß es im Bereich einer Mischungslücke, vorzugsweise zwischen 1 : 2 und 2 : 1, liegt. Damit kann sich der Alkohol, das Acetat bzw. das Pyrolidon nicht vollständig in der wässerigen Lauge lösen, so daß sich eine Emulsion ergibt. Diese Emulsion besitzt eine gegenüber den reinen Substanzen bzw. der Lösung hohe Viskosität, wobei sich eine breiige Masse ergibt. Damit besitzt das Entlackierungsmittel ein hohes Haftvermögen auf den Lackflächen der Kunststoffteile, so daß diese auch dann benetzt werden, wenn sie im Umwälzvorgang weit oberhalb eines gegebenenfalls vorhandenen Flüssigkeitsspiegels zu liegen kommen. Damit ergibt sich der Vorteil, daß das Entlackierungsmittel die Lackschichten während der gesamten Umwälzdauer der Kunststoffteile vom Entlackierungsmittel benetzt werden, so daß sich eine ausreichend niedrige Einwirkdauer des Entlackierungsmittels von ca. 7 bis 8 Stunden auch nahe der Raumtemperatur ergibt. Damit entfällt die Notwendigkeit, das Entlackierungsmittel bzw. die Kunststoffteile während des Umwälzvorganges heizen zu müssen, so daß der erforderliche Energieeintrag entsprechend reduziert ist. Selbstverständlich ist es auch vorstellbar, den Quellprozeß der Lackschichten auch bei erhöhter Temperatur durchzuführen, wobei sich bereits bei geringer Temperaturerhöhung eine wesentliche Verkürzung der erforderlichen Einwirkdauer des Entlackierungsmittels ergibt. Eine Temperaturerhöhung auf ca. 60°C ist dabei in jedem Fall ausreichend, um die erforderliche Einwirkdauer des Entlackierungsmittels auf wenige Minuten zu reduzieren, wodurch sich gegenüber dem Stand der Technik noch eine erhebliche Energieeinsparung ergibt. Zusätzlich ergibt sich der Vorteil, daß nur eine sehr geringe Menge an Entlackierungsmittel von ca. 3 bis 4 Gew. % der Schüttung erforderlich ist, da sich das Entlackierungsmittel stets als dünner Film auf den Kunststoffteilen niederschlägt. Es reicht damit aus, gerade so viel Entlackierungsmittel den Kunststoffteilen zuzuführen, daß die Kunststoffteile in etwa gleichmäßig mit dem Entlackierungsmittel benetzt sind. Durch das Umwälzen der Kunststoffteile wird einerseits eine gleichmäßige Benetzung der Kunststoffteile erreicht und andererseits ein Entmischen des als Emulsion vorliegenden Entlackierungsmittels verhindert. Zusätzlich könnte die Umwälzung kratzend auf die Kunststoffteile einwirken, um angequollenen Lack bereits während der Einwirkung des Entlackierungsmittels von den Kunststoffteilen zu lösen. Dies ist jedoch für eine effektive Prozeßführung nicht unbedingt erforderlich.

Insbesondere Kfz-Stoßstangen sind mit hoch schlagfesten, elastisch nachgiebigen Lacken beschichtet, um Lackschäden durch Steinschlag weitestgehend zu vermeiden. Diese Lacke sind in der Regel duroplastische Lacke, die zur Bildung einer hohen Haftung über entsprechende Grundierungen am Kunststoffkörper aufgebracht sind. Diese Lacke bzw. Grundierungen sind auch chemisch sehr beständig. Zum Entlakkieren dieser Teile ist es daher gemäß Anspruch 3 vorteilhaft, wenn die Emulsion Benzylalkohol, Buthyl-Glykol-Acetat und/oder N-Methylpyrolidon enthält. Diese Stoffe haben außerdem den Vorteil, daß sie eine relativ kleine Molekülgröße aufweisen, so daß sie leicht zwischen die Kunststoffteile und die Lackschichten kriechen und damit die Lackschichten effektiv aufquellen können. Für den Laugenanteil hat sich verdünnte Natron- bzw. Kalilauge bewährt, da diese das Haftvermögen der Lackschichten an den Kunststoffteilen besonders effektiv schwächen.

Das erfindungsgemäße Entlackierungsmittel ist basisch, so daß es nicht einfach über die Kanalisation entsorgt werden darf. Es ist daher erforderlich, das Entlackierungsmittel zu neutralisieren. Erfolgt diese Neutralisierung gemäß Anspruch 4 nach erfolgter Einwirkung auf die Kunststoffteile durch Zugabe eines Neutralistionsmittels zu den Kunststoffteilen, so hat dies den Vorteil, daß nachfolgende Bearbeitungsvorrichtungen für die Kunststoffteile nicht vom basischen Milieu des Entlackierungsmittels angegriffen und gegebenenfalls zerstört werden können. Damit können diese Vorrichtungen aus preisgünstigem Stahl erstellt werden, ohne deren Lebensdauer durch die Einwirkung des basischen Entlackierungsmittels zu reduzieren. Zur Neutralisierung des Entlackierungsmittels hat sich eine Säure oder eine Pufferlösung bewährt, wobei die Säure wesentlich effektiver als eine Pufferlösung wirkt, sofern sie im richtigen Mischungsverhältnis zur Laugenmenge zugegeben wird. Auf dieses Mischungsverhältnis müßte beim Einsatz einer Pufferlösung nicht geachtet werden, diese ist jedoch weniger effizient, so daß entsprechend mehr Neutralisierungsmittel erforderlich ist.

Um eine ausreichende Trocknungswirkung des Feststoffs zu erzielen, ist es wichtig, daß dieser eine möglichst große aktive Oberfläche aufweist. Andererseits soll die erforderliche Feststoffmenge möglichst gering bleiben, um die Verfahrenskosten niedrig zu halten. Als für das erfindungsgemäße Verfahren besonders günstige Feststoffe haben sich daher gemäß Anspruch 5 solche herausgestellt, deren auf die Masse bezogene Oberfläche wenigstens 1 m²/g aufweist. Damit ergibt sich bei geringer Feststoffzugabe zu den Kunststoffteilen eine ausreichend große Aufsaugwirkung des Entlackierungsmittels durch den Feststoff.

Grundsätzlich kann der Feststoff sehr leicht durch Sieben von den Kunststoffteilen getrennt werden, allerdings ist es auf diese Weise nicht hundertprozentig ausgeschlossen, daß einzelne Feststoffpartikel an den Kunststoffteilen haften bleiben. Um eine Wiederlackierung eines aus diesen Kunststoffteilen gefertigten Kunststoffkörpers nicht zu beeinträchtigen, ist es gemäß Anspruch 6 günstig, wenn der Feststoff ein Pulver mit einer durchschnittlichen Korngröße von höchstens 20 µm, vorzugsweise höchstens 1 µm ist.

Günstige Feststoffe zum Aufsaugen des Entlackierungsmittels ergeben sich aus Anspruch 7. Bevorzugt wird insbesondere gefällte Kieselsäure, da diese eine sehr große spezifische Oberfläche von ca. 200 m²/g aufweist und außerdem eine Korngröße von unter 1 µm besitzt. Durch diese geringe Korngröße stören Kieselsäurereste an den Kunststoffteilen eine spätere Wiederlackierung von aus diesen erstellten Kunststoffkörpern in keiner Weise. Aktivkohle besitzt zwar eine noch größere spezifische Oberfläche von ca. 500 bis 800 m²/g, sie besitzt jedoch eine relativ große Körnung, so daß Aktivkohlereste an den Kunststoffteilen ein späteres Wiederlackieren unter Umständen stören könnten. Diatomäenerde enthält Gerüste von Kleinstlebewesen und besitzt dadurch eine beträchliche spezifische Oberfläche zwischen 20 und 30 m²/g bei sehr geringer Korngröße. Ruß, Talkumpulver bzw. Kalksteinmehl besitzen eine sehr geringe Korngröße von unter 1 µm, wobei deren spezifische Oberfläche im Bereich von 1 m²/g liegt, so daß zum Aufsaugen des Entlackierungsmittels entsprechend größere Mengen des Feststoffs erforderlich sind.

Erfolgt die Zugabe des Entlackierungsmittels und des Feststoffs zu den lackierten Kunststoffteilen gemäß Anspruch 8 in einem geschlossenen Behälter, so findet der gesamte naßchemische Prozeß ausschließlich in diesem Behälter statt. Damit kann die gesamte übrige Prozeßführung trocken erfolgen, so daß an die weiteren Bearbeitungsvorrichtungen keinerlei Dichtigkeitsanforderungen gestellt werden und diese auch nicht chemisch beständig ausgerüstet sein müssen.

Durch Umwälzen der Kunststoffteile mit dem Feststoff wird gemäß Anspruch 9 eine gleichmäßige Verteilung des Feststoffs über die Schüttung erzielt. Damit ergibt sich eine gleichmäßige und nahezu vollständige Entfernung des Entlackierungsmittels, so daß die weiteren Bearbeitungsschritte trocken erfolgen können.

Um auch Reste des Entlackierungsmittels, die durch den Feststoff nicht aufgesaugt werden konnten, von den nachfolgenden Bearbeitungseinrichtungen fernzuhalten, ist es gemäß Anspruch 10 günstig, die Kunststoffteile anschließend zu trocknen. Vorzugsweise erfolgt die Trocknung durch eine Windsichtung, bei der die lackierten Kunststoffteile von unten durch ein Gas, insbesondere Luft angeströmt werden. Kleine Partikel, also insbesondere der mit dem Entlackierungsmittel vollgesaugte Feststoff werden durch die Gasströmung mitgenommen, während die lakkierten Kunststoffteile in der Windsichtungsvorrichtung verbleiben. Damit erfolgt neben der Trocknung der Kunststoffteile zusätzlich eine Trennung, wodurch sich die Reinheit des aus dem Verfahren wiedergewonnenen Kunststoffs entsprechend verbessert. Dies spielt insbesondere beim Wiederlackieren von daraus erstellten Kunststoffkörpern eine Rolle. Außerdem kann auf diese Weise wenigstens ein Teil des Entlackierungsmittels und ggf. des Feststoffs wiedergewonnen werden, um es erneut einsetzen zu können.

Das Entlackierungsmittel kann den Lack bzw. dessen Grundierung lediglich aufquellen, ohne diesen zu lösen, da insbesondere bei duroplastischen Lacken eine Lösung praktisch unmöglich ist. Um den Lack von den Kunststoffteilen abzulösen, ist es gemäß Anspruch 11 vorteilhaft, diesen von den Kunststoffteilen abzuschlagen. Hierzu wird vorzugsweise eine Hammer- oder Prallmühle eingesetzt, die entsprechende Schläge auf die Kunststoffteile ausübt. Nach ausreichend langer Bearbeitung der Kunststoffteile in der Hammer- oder Prallmühle im Bereich zwischen 15 und 60 Sekunden sind die Kunststoffteile vom Lack befreit.

Um die entlackierten Kunststoffteile problemlos wiederverwenden zu können, ist es gemäß Anspruch 12 wichtig, den Kunststoff von den Lackpartikeln und dem Flüssigkeit aufsaugenden Feststoff zu trennen, so daß ein nahezu reines Kunststoffmaterial vorliegt. Dies erfolgt vorzugsweise durch Sieben, da die Kunststoffteile relativ groß sind, während die abgeschlagenen Lackpartikel bzw. der Feststoff eine erheblich geringer Korngröße aufweisen. Vorzugsweise ist in der Hammer- oder Prallmühle, in der der Lack von den Kunststoffteilen abgeschlagen wird, bereits ein entsprechendes Sieb vorgesehen, durch das die von den Kunststoffteilen abgeschlagene Lackpartikel sowie der Feststoff, nicht jedoch die Kunststoffteile dringen können. Damit sorgt die Hammer- oder Prallmühle bereits für eine Trennung der Kunststoffteile vom Lack bzw. Feststoff. Um auch den Feststoff bzw. das darin enthaltene Entlackierungsmittel wiederverwenden zu können, ist es vorteilhaft, den Feststoff vom abgeschlagenen Lack zu trennen, was ebenfalls durch Sieben erfolgt. Dies ist leicht möglich, da die abgeschlagenen Lackpartikel eine wesentlich größere Korngröße als der Feststoff aufweisen. Grundsätzlich könnte dieses zusätzliche Sieb auch in der Hammer- oder Prallmühle installiert sein, so daß diese die drei Fraktionen Kunststoffteile, Lackpartikel und Feststoff separiert. Alternativ ist es auch vorstellbar, die Lackpartikel vom Feststoff durch eine nachgeordnete Siebeinrichtung zu trennen. Die auf diese Weise gesammelten Lackpartikel besitzen eine sehr unterschiedliche Zusammensetzung, da Lacke aus verschiedensten Polymeren bestehen und bei der Bearbeitung der lackierten Kunststoffteile in der Hammer- oder Prallmühle auch geringe Mengen des Kunststoffmaterials abgerieben werden, die aufgrund ihrer geringen Größe in die Lackfraktion kommen. Außerdem enthalten die Lacke unterschiedlichste Pigmente und zum Teil auch duroplastische Kunststoffe, so daß diese entsorgt werden müssen. Die entlackierten Kunststoffteile können entweder direkt zur Produktion neuer Kunststoffkörper herangezogen werden oder zuvor in einer Schneidmühle auf eine für Spritzgußmaschinen geeignete Korngröße gebracht werden.

Um das Entlackierungsmittel und gegebenenfalls den Feststoff wiedergewinnen zu können, ist es gemäß Anspruch 13 vorteilhaft, den gegebenenfalls von den Lackpartikeln befreiten Feststoff auf mindestens 70°C, vorzugsweise mindestens 100°C zu erhitzen. Da die Feststoffmenge im Verhältnis zur Kunststoffteileschüttung gering ist, hält sich der hierfür erforderliche Energieaufwand in vertretbaren Grenzen. Durch diese erhöhte Temperatur dampft der Feststoff die in ihm aufgesaugte Flüssigkeit teilweise aus, die anschließend zur Rückgewinnung wieder kondensiert werden kann. Insbesondere, wenn die Lackpartikel nicht vom Feststoff getrennt werden sollen, ist es günstig, den mit dem Entlackierungsmittel beaufschlagten Feststoff auf eine Temperatur zu erhitzen, die geringer als die Plastifizierungstemperatur der Kunststoffteile ist. Dadurch wird verhindert, daß sich die Kunststoffteile an den Heizeinrichtungen festbacken und dadurch die Prozeßführung erschweren. Um den Energieaufwand zum Aufheizen des Feststoffs niedrig zu halten, ist es günstig, die beim Abschlagen des Lackes von den Kunststoffteilen eingebrachte mechanische Energie zur Erwärmung des Feststoffs zu nutzen. Vorzugsweise wird der Feststoff von einer Wärmepumpe erwärmt, die von der Wärme der entlackierten Kunststoffteile gespeist wird. Damit kann die beträchtliche Wärmemenge, die in den entlackierten Kunststoffteilen enthalten ist, vorteilhaft zum Erhitzen des Feststoffs herangezogen werden, wobei auf zusätzliche Wärmequellen verzichtet werden kann.

Wird der Feststoff zusätzlich gemäß Anspruch 14 durch einen Gegenstromwärmetauscher mit sekundärseitiger Heizung geführt, so ergibt sich eine besonders effiziente Erwärmung des Feststoffs bei niedrigstem Energieeinsatz, da auch die Wärme des von der Flüssigkeit wenigstens teilweise befreiten Feststoffs wieder zum Erwärmen des ankommenden Feststoffs herangezogen wird. Zur effizienten Rückgewinnung des Entlackungsmittels und des Feststoffs wird das vom erwärmten Feststoff ausdampfende Gas abgepumpt. Vorzugsweise wird der atmosphärische Druck auf etwa 100 bis 500 mbar reduziert, um ein möglichst effektives Ausdampfen des Feststoffs zu gewährleisten. Der gewonnene Dampf wird vorzugsweise in einem Kühler kondensiert und anschließend in einem Phasenseperator in eine ölige und eine wässerige Phase getrennt, so daß der organische Anteil des Entlackierungsmittels für die weitere Prozeßführung wiedergewonnen werden kann. Die wässerige Phase enthält Wasser und ein Salz, die problemlos in die Kanalisation entsorgt werden können.

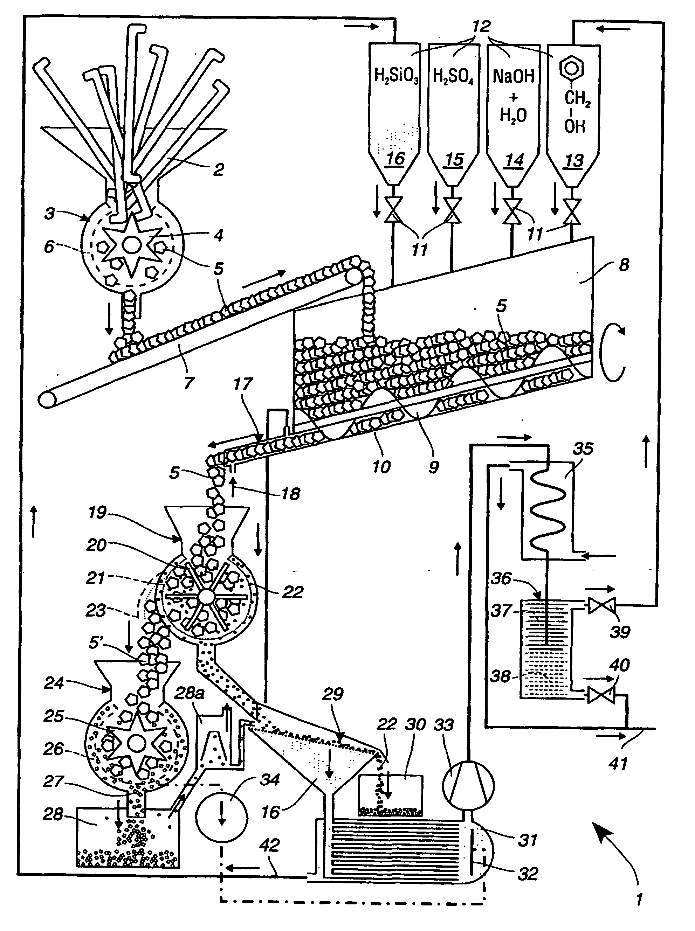

Das erfindungsgemäße Verfahren wird beispielhaft anhand der Zeichnung erläutert, ohne den Schutzumfang zu beschränken.

Die einzige Figur zeigt eine schematische Darstellung einer Vorrichtung 1 zum Entlackieren von Kunststoffkörpern 2, die lediglich beispielhaft als Stoßstangen dargestellt sind. Selbstverständlich könnten auch beliebige andere lackierte Kunststoffkörper 2 mit dieser Vorrichtung 1 entlackiert werden.

Die lackierten Kunststoffkörper 2 werden zunächst einer Schneidmühle 3 zugeführt, in der sie durch Schneidwerkzeuge 4 in Kunststoffteile 5 zerkleinert werden, die eine schüttfähige Größe aufweisen. Die Schneidmühle 3 weist außerdem ein Sieb 6 auf, welches lediglich Kunststoffteile 5 einer bestimmten Maximalgröße durchläßt. Damit werden die Kunststoffkörper 2 so lange durch die Schneidwerkzeuge 4 zerkleinert, bis die Kunststoffteile 5 eine vorgegebene Maximalgröße erreicht haben, so daß sie durch das Sieb 6 dringen können. Das Sieb 6 ist so eingestellt, daß die Kunststoffteile 5 eine maximale Größe von ca. 2 cm bis 10 cm aufweisen, so daß sie mit bekannten Schüttguttechniken transportiert und bearbeitet werden können. Die Kunststoffteilgröße wird jedoch nicht unnötig klein gewählt, um die Gesamtoberfläche der Kunststoffteile 5 möglichst klein zu halten, was für die weitere Prozeßführung vorteilhaft ist.

Die zerkleinerten, lackierten Kunststoffteile 5 werden mit einer Transportvorrichtung 7, die in der Figur als Förderband angedeutet ist, einem Behälter 8 zugeführt. Zur Optimierung der Prozeßführung ist es auch vorstellbar, die Kunststoffteile 5 zwischenzulagern, um eine möglichst kontinuierliche Arbeitsweise der Schneidmühle 3 zu ermöglichen.

Sobald der Behälter 8 ausreichend mit Kunststoffteilen 5 gefüllt ist, wird eine Förderschnecke 9 in schräg aufwärts fördernder Richtung in Drehung versetzt, die im Bereich eines Bodens 10 des Behälters 8 vorgesehen ist. Diese Förderschnecke 9 sorgt für eine stetige Umwälzung der Kunststoffteile 5 im Behälter 8, wobei der Boden 10 des Behälters 8 spitzwinkelig zur Horizontalen angestellt ist. Auf diese Weise ist eine günstige Umwälzung der Kunststoffteile 5 gegeben, so daß alle Kunststoffteile 5 mehrmals in den Bereich der Förderschnecke 9 geraten.

Der Behälter 8 steht über Ventile 11 mit Vorratsbehältern 12 in Verbindung. In diesen Vorratsbehältern 12 sind Benzylalkohol 13, verdünnte Natronlauge 14, Schwefelsäure 15 sowie gefällte Kieselsäure 16 gelagert, die wahlweise oder in Kombination dem Behälter 8 zugeführt werden können.

Zunächst werden zu den lackierten Kunststoffteilen 5 Benzylalkohol 13 und wässerige Natronlauge 14 zugegeben, wobei es keine Rolle spielt, ob diese beiden Flüssigkeiten gleichzeitig oder nacheinander in den Behälter 8 eingebracht werden. Das Mischungsverhältnis zwischen dem Benzylalkohol 13 und der wässerigen Natronlauge 14 ist im Bereich einer Mischungslücke bei ca. 1 : 1 gewählt, so daß die beiden Flüssigkeiten 13, 14 keine Lösung bilden können.

Durch das Umwälzen der Flüssigkeiten 13, 14 im Behälter 8 durch die Förderschnecke 9 entsteht eine Emulsion zwischen dem Benzylalkohol 13 und der wässerigen Natronlauge 14. Diese Emulsion besitzt eine gegenüber den Flüssigkeiten 13, 14 wesentlich höhere Viskosität, so daß sie aufgrund ihrer breiigen Konsistenz günstig auf den Kunststoffteilen 5 sowie deren Lackschichten haftet. Die Menge der zugegebenen Emulsion wird dabei so gewählt, daß die Kunststoffteile 5 mit dem Entlackierungsmittel 13, 14 lediglich benetzt werden, wobei nach vollständiger Benetzung der Kunststoffteile 5 nur noch sehr geringe Mengen des Entlackierungsmittels 13, 14 im Bereich des Behälterbodens 10 verbleiben.

Dieses Entlackierungsmittel 13, 14 greift die Lackschichten auf den Kunststoffteilen 5 an und bringt diese zum Aufquellen. Damit wird die Haftung der Lackschichten auf den Kunststoffteilen 5 reduziert. Nach einer Umwälzzeit von ca. 8 Stunden ohne zusätzliche Wärmezufuhr ist der Lack auf den Kunststoffteilen 5 ausreichend gequollen, so daß er leicht mechanisch von den Kunststoffteilen 5 getrennt werden kann.

Zum Teil wird der Lack durch eine Kratzwirkung der Förderschnecke 9 von den Kunststoffteilen 5 abgeschabt, dies ist jedoch für die Prozeßführung nicht unbedingt erforderlich. Durch das Umwälzen der Kunststoffteile 5 durch die Förderschnecke 9 erfolgt eine geringe Erwärmung der Kunststoffteile 5 sowie des Entlackierungsmittels 13, 14, wobei dieses normalerweise nicht wärmer als etwa lauwarm wird. Zur Beschleunigung der Prozeßführung könnte der Behälter 8 zusätzlich beheizt werden, wobei bereits Temperaturen von ca. 40° eine erhebliche Beschleunigung des Lackquellens bewirken.

Nachdem der Lack an den Kunststoffteilen 5 ausreichend gequollen ist, wird das basische Entlackierungsmittel 13, 14 durch Zugabe der Schwefelsäure 15 neutralisiert, wobei die erforderliche Schwefelsäurenmenge aus der Menge der im Entlackierungsmittel 13, 14 enthaltenen Natronlauge bestimmt wird. Nach kurzem weiterem Umwälzen der Kunststoffteile 5 ist das Entlackierungsmittel 13, 14 neutralisiert, so daß keinerlei laugenbeständige Werkstoffe für die weitere Bearbeitung der Kunststoffteile 5 erforderlich sind.

Um die weitere Prozeßführung trocken gestalten zu können, wird das neutralisierte Entlackierungsmittel 13, 14 durch Zugabe gefällter Kieselsäure 16 zu den Kunststoffteilen 5 aufgesaugt. Die gefällte Kieselsäure 16 wird mit den Kunststoffteilen 5 eine Zeitlang umgewälzt, um eine gleichmäßige Durchmischung zwischen beiden zu erzielen. Die gefällte Kieselsäure 16 besitzt eine sehr große spezifische Oberfläche, so daß etwa 5 bis 6 Gewichtsprozent der gesamten Schüttung ausreichen, um das Entlackierungsmittel 13, 14 aufzusaugen.

Die gefällte Kieselsäure 16 saugt zwar den größten Teil des Entlackierungsmittels 13, 14 auf, jedoch verbleibt eine gewisse Restfeuchigkeit an den Kunststoffteilen 5, die die nachfolgende Prozeßführung erschweren könnten. Deshalb werden die aus dem Behälter 8 entnommenen Kunststoffteile 5 einer Trocknungsvorrichtung 17 zugeführt, die als Windsichtungsvorrichtung ausgebildet ist. Dabei wird vorzugsweise erwärmte Luft 18 von unten durch die Kunststoffteile 5 geströmt. Die Luftströmung 18 nimmt dabei sowohl Feuchtigkeit als auch den größten Anteil der gefällten Kieselsäure mit, während die Kunststoffteile 5 in der Trocknungseinrichtung 17 verbleiben.

Nach erfolgter Trocknung werden die Kunststoffteile 5 einer Hammermühle 19 zugeführt, die mit Schlägern 20 den gequollenen Lack von den Kunststoffteilen 5 abschlägt. Radial um die Schläger 20 ist ein Sieb 21 angeordnet, das eine Maschenweite von ca. 3 mm aufweist, so daß die Kunststoffteile 5 sicher innerhalb des Siebes 21 verbleiben. Abgeschlagene Lackpartikel 22 können jedoch das Sieb 21 durchdringen und werden auf diese Weise zusammen mit noch vorhandener Kieselsäure 16 von den Kunststoffteilen 5 getrennt. Die Hammermühle 19 weist eine Klapptür 23 auf, die in der Figur strichliert angedeutet ist. Über diese Klapptür 23 können entlackierte Kunststoffteile 5' aus der Hammermühle 19 entnommen werden.

Die entlackierten Kunststoffteile 5' werden anschließend einer weiteren Schneidmühle 24 zugeführt, in der sie auf die gewünschte Korngröße von ca. 2 bis 8 mm zerkleinert werden. Diese Schneidmühle 24 weist ebenfalls Schneidwerkzeuge 25 auf, die radial von einem Sieb 26 umgeben sind. Dieses Sieb 26 hat eine Maschenweite von ca. 8 mm, so daß ein Kunststoffgranulat 27 hergestellt wird, das eine ausreichend geringe Korngröße besitzt, um beispielsweise in Spritzgußmaschinen einsetzbar zu sein. Dieses Kunststoffgranulat 27 wird in Behältern 28 gesammelt und bildet einen wertvollen Rohstoff zur Herstellung neuer Kunststoffkörper 2. Dem Behälter 28 ist eine Entstaubungsvorrichtung in Form eines Zyklons 28a zugeordnet, in dem noch vorhandene Lackpartikel 22 bzw. Feststoffe 16 abgeschieden werden.

Die feinen Partikel, die einerseits bei der Trocknungs-und Windsichtungseinrichtung 17 und andererseits in der Hammermühle 19 und dem Zyklon 28a von den Kunststoffteilen 5 getrennt wurden, werden einer Siebvorrichtung 29 zugeführt, in der sie in eine Grob- und eine Feinfraktion getrennt werden. Die Lackpartikel 22 sind gegenüber der feinpulverigen Kieselsäure 16 relativ grobkörnig, so daß die Lackpartikel 22 auf diese Weise von der Kieselsäure 16 getrennt werden können.

Die Lackpartikel 22 bestehen aus sehr unterschiedlichen Substanzen, wobei insbesondere auch duroplastische Polymere enthalten sind, deren Wiederverwendung unwirtschaftlich wäre. Außerdem ist der Anfall an Lackpartikeln 22 aufgrund der sehr dünnen Lackschichten relativ gering, so daß die Lackpartikel 22 zwecks Entsorgung in einem Abfallbehälter 30 gesammelt werden. Insbesondere ist es vorstellbar, die Lackpartikel 22 einer Müllverbrennungsanlage zuzuführen, um die darin enthaltene chemische Energie zu nutzen.

Die gefällte Kieselsäure 16 ist mit dem Entlackierungsmittel 13, 14 vollgesaugt, so daß diese einen wertvollen Rohstoff darstellt. Um insbesondere den Benzylalkohol 13 aus der Kieselsäure 16 wiederzugewinnen, wird diese zunächst in einen Gegenstromwärmetauscher 31 und anschließend durch eine Heizvorrichtung 32 auf eine Temperatur von ca. 100°C erwärmt. Zusätzlich wird die umgebende Atmosphäre durch eine Vakuumpumpe 33 auf einen Druck von ca. 50 bis 500 mbar verdünnt, so daß die gefällte Kieselsäure 16 die in ihr enthaltene Flüssigkeit effizient abdampft. Die dabei entstehende Verdunstungskälte wird durch die Heizvorrichtung 32 kompensiert.

Grundsätzlich könnte jede beliebige Heizvorrichtung 32 herangezogen werden. Im vorliegenden Fall ist es jedoch günstig, die beträchtliche Wärme, die in den aus der Hammermühle 19 kommenden entlackierten Kunststoffteilen 5' steckt, mittels einer Wärmepumpe 34 zu nutzen. Diese Wärmepumpe 34 entnimmt den entlackierten Kunststoffteilen 5 die darin enthaltene Wärme, um die gefällte Kieselsäure 16 auf ca. 100°C zu erwärmen, wobei die erforderliche Wärme zum Ausdampfen der Flüssigkeit aus der gefällten Kieselsäure 16 wesentlich geringer ist als die in den Kunststoffteilen 5' enthaltene Wärme.

Der durch die Vakuumpumpe 33 verdichtete Dampf wird in einem Kühler 35 kondensiert und anschließend einem Phasentrenner 36 in der Nähe der Behältermitte zugeführt, wobei keinerlei Rührwerk oder ähnliches enthalten ist. Mit der Zeit trennt sich die Flüssigkeit in zwei Phasen auf, wobei eine ölige Phase 37 auf einer wässerigen Phase 38 schwimmt. Die wässerige Phase 38 enthält Wasser und Glaubersalz, das aus der Neutralisierungsreaktion zwischen der Natronlauge 14 und der Schwefelsäure 15 entstanden ist. Diese wässerige Phase 38 kann problemlos in die Kanalisation entsorgt werden.

Die ölige Phase 37 besteht dagegen aus reinem Benzylalkohol 13, der über ein Ventil 39 dem entsprechenden Vorratsbehälter 12 zugeführt wird. Um zu verhindern, daß die ölige Phase 37 in das Abwasser gelangt, ist die wässerige Phase 38 über ein weiteres Ventil 40 mit einer Abwasserleitung 41 verbunden.

Für den Fall, daß die Trennung der Lackpartikel 22 von der gefällten Kieselsäure 16 in der Siebvorrichtung 29 eine ausreichende Qualität aufweist und die gefällte Kieselsäure 16 zu wenigstens 50 % von der in ihr enthaltenen Flüssigkeit befreit wurde, kann auch die gefällte Kieselsäure 16 wiederverwendet werden. Zu diesem Zweck ist der Gegenstromwärmetauscher 31 über eine Leitung 42 mit dem entsprechenden Vorratsbehälter 12 für die gefällte Kieselsäure 16 verbunden.

Damit werden alle eingesetzten Stoffe mit Ausnahme der Natronlauge und der Schwefelsäure, die sich zu Wasser und Glaubersalz verbinden, im Kreislauf wiederverwendet. Die anfallenden Abfallstoffe können zum Teil direkt über die Abwasserleitung 41 entsorgt bzw. einer Müllverbrennung zugeführt werden. Der größte Anteil der lackierten Kunststoffkörper 2 wird als wertvoller Rohstoff in Form eines Kunststoffgranulats 27 zurückgewonnen, aus dem erneut Kunststoffkörper 2 erstellt werden können. Der gesamte Entlackierungsprozeß benötigt überraschend wenig Energie, so daß dieses Verfahren eine sehr hohe Umweltverträglichkeit besitzt.

### Bezugszeichenliste

- 1: Vorrichtung
- 2: Kunststoffkörper
- 3: Schneidmühle
- 4: Schneidwerkzeug
- 5: lackiertes Kunststoffteil
- 5': entlackiertes Kunststoffteil
- 6: Sieb
- 7: Transportvorrichtung
- 8: Behälter
- 9: Förderschnecke
- 10: Behälterboden
- 11: Ventil
- 12: Vorratsbehälter
- 13: Benzyl-Alkohol
- 14: wässerige Natronlauge
- 15: Schwefelsäure
- 16: gefällte Kieselsäure
- 17: Trocknungsvorrichtung
- 18: Luft
- 19: Hammermühle
- 20: Schläger
- 21: Sieb
- 22: Lackpartikel
- 23: Klapptür
- 24: Schneidmühle
- 25: Schneidwerkzeug
- 26: Sieb
- 27: Kunststoffgranulat
- 28: Behälter
- 28a: Zyklon
- 29: Siebvorrichtung
- 30: Abfallbehälter
- 31: Gegenstromwärmetauscher
- 32: Heizvorrichtung
- 33: Vakuumpumpe
- 34: Wärmepumpe
- 35: Kühler
- 36: Phasentrenner
- 37: ölige Phase
- 38: wässerige Phase
- 39, 40: Ventil
- 41: Abwasserleitung
- 42: Leitung

## Patentansprüche

1. Verfahren zum Entlackieren von mit Lackschichten versehenen Kunststoffkörpern (2), bei dem die Kunststoffkörper (2) auf eine schüttfähige Teilegröße (5) zerkleinert und anschließend mit einem die Haftung der Lackschichten mindernden Entlackierungsmittel (13, 14) versetzt und zusammen mit diesen umgewälzt werden, **dadurch gekennzeichnet, daß** den lackierten Kunststoffteilen (5) nach erfolgter Einwirkung durch das Entlackierungsmittel (13, 14) ein pulverförmiger, das Entlackungsmittel (13, 14) aufsaugender Feststoff (16) zugesetzt wird.

2. Verfahren nach Anspruch 1, **dadurch gekennzeichnet, daß** das Entlackierungsmittel (13, 14) eine Emulsion aus mindestens einem benzylsubstituierten Alkanol (13), Alkyl-Glykol-Acetat und/oder N-Alkylpyrolidon mit einer wässerigen Lauge (14) enthält, die sich nicht vollständig mischen lassen und deren Mischungsverhältnis im Bereich einer Mischungslücke liegt.

3. Verfahren nach Anspruch 2, **dadurch gekennzeichnet, daß** die Emulsion (13, 14) Benzylalkohol (13), Buthyl-Glykol-Acetat, N-Methylpyrolidon, Natron- (14) und/oder Kalilauge enthält.

4. Verfahren nach mindestens einem der Ansprüche 1 bis 3, **dadurch gekennzeichnet, daß** das Entlackierungsmittel (13, 14) nach erfolgter Einwirkung auf die lackierten Kunststoffteile (5) durch Zugabe einer Säure (15) und/oder einer Pufferlösung zu den Kunststoffteilen (5) neutralisiert wird.

5. Verfahren nach mindestens einem der Ansprüche 1 bis 5, **dadurch gekennzeichnet, daß** der Feststoff (16) eine auf dessen Masse bezogene Oberfläche von mindestens 1 m²/g aufweist.

6. Verfahren nach mindestens einem der Ansprüche 1 bis 5, **dadurch gekennzeichnet, daß** der Feststoff (16) eine durchschnittliche Korngröße von höchstens 20 µm, vorzugsweise höchstens 1 µm aufweist.

7. Verfahren nach mindestens einem der Ansprüche 1 bis 7, **dadurch gekennzeichnet, daß** der Feststoff (16) gefällte Kieselsäure (16), Aktivkohle, Diatomäenerde, Ruß, Talkumpulver und/oder Kalksteinmehl enthält.

8. Verfahren nach mindestens einem der Ansprüche 1 bis 7, **dadurch gekennzeichnet, daß** die Zugabe des Entlackierungsmittels (13, 14) und des Feststoffs (16) zu den lakkierten Kunststoffteilen (5) in einem geschlossenen Behälter (8) erfolgt.

9. Verfahren nach mindestens einem der Ansprüche 1 bis 8, **dadurch gekennzeichnet, daß** der Feststoff (16) mit den Kunststoffteilen (5) umgewälzt wird.

10. Verfahren nach mindestens einem der Ansprüche 1 bis 9, **dadurch gekennzeichnet, daß** die Kunststoffteile (5) nach dem Einwirken des Entlackierungsmittels (13, 14) und/oder nach dessen Aufsaugen durch den Feststoff (16) vorzugsweise durch Windsichtung getrocknet werden.

11. Verfahren nach mindestens einem der Ansprüche 1 bis 10, **dadurch gekennzeichnet, daß** der Lack (22) von den Kunststoffteilen (5) nach dem Einwirken des Entlackierungsmittels (13, 14) und/oder nach dessen Aufsaugen durch den Feststoff (16) abgeschlagen wird.

12. Verfahren nach mindestens einem der Ansprüche 1 bis 11, **dadurch gekennzeichnet, daß** der Feststoff (16) von den Lackpartikeln (22) und/oder von den entlackierten Kunststoffteilen (5') vorzugsweise durch Sieben getrennt wird.

13. Verfahren nach mindestens einem der Ansprüche 1 bis 12, **dadurch gekennzeichnet, daß** der mit dem Entlackierungsmittel (13, 14) beaufschlagte Feststoff (16) auf eine Temperatur von mindestens 70°C, vorzugsweise mindestens 100°C, jedoch unterhalb der Plastifizierungstemperatur der Kunststoffteile (5) erhitzt wird, wobei der aus dem Feststoff (16) austretende Dampf zur wenigstens teilweisen Rückgewinnung des Entlackierungsmittels (13, 14) kondensiert wird, wobei vorzugsweise die beim Abschlagen des Lackes (22) von den Kunststoffteilen (5) eingebrachte Energie zur Erwärmung des Feststoffs (16) genutzt wird, wobei der Feststoff (16) bevorzugt von einer Wärmepumpe (34) erwärmt wird, die von der Wärme der entlackierten Kunststoffteile (5') gespeist wird.

14. Verfahren nach Anspruch 13, **dadurch gekennzeichnet, daß** der mit dem Entlackierungsmittel (13, 14) beaufschlagte Feststoff (16) einem Gegenstromwärmetauscher (31) mit sekundärseitiger Heizung (32) zugeführt wird, wobei der vom erwärmten Feststoff (16) ausströmende Dampf abgepumpt und kondensiert wird.

## Claims

1. Method of removing paint from plastics elements (2) bearing coats of paint, in which the plastics elements (2) are comminuted to a pourable parts size (5), then a paint remover (13, 14) which reduces the adhesion of the coats of paint is added and is circulated together with them, **characterized in that** following their exposure to the paint remover (13, 14) a pulverlent solid (16) which absorbs the paint remover (13, 14) is added to the painted plastics parts (5).

2. Method according to Claim 1, **characterized in that** the paint remover (13, 14) comprises an emulsion of at least one benzyl-substituted alkanol (13), alkyl glycol acetate and/or N-alkylpyrrolidone with an aqueous alkali solution (14), these components being incompletely miscible and having a mixing ratio which lies within the range of a miscibility gap.

3. Method according to Claim 2, **characterized in that** the emulsion (13, 14) comprises benzyl alcohol (13), butyl glycol acetate, N-methylpyrrolidone, aqueous sodium (14) and/or potassium hydroxide solution.

4. Method according to at least one of Claims 1 to 3, **characterized in that** after the paint remover (13, 14) has acted on the painted plastics parts (5) it is neutralized by adding an acid (15) or a buffer solution to the plastics parts (5).

5. Method according to at least one of Claims 1 to 4, **characterized in that** the solid (16) has a surface area, based on its mass, of at least 1 m²/g.

6. Method according to at least one of Claims 1 to 5, **characterized in that** the solid (16) has an average particle size of not more than 20 µm, preferably not more than 1 µm.

7. Method according to at least one of Claims 1 to 6, **characterized in that** the solid (16) comprises precipitated silica (16), activated carbon, diatomaceous earth, carbon black, talc powder and/or limestone flour.

8. Method according to at least one of Claims 1 to 7, **characterized in that** the paint remover (13, 14) and the solid (16) are added to the painted plastics parts (5) in a closed container (8).

9. Method according to at least one of Claims 1 to 8, **characterized in that** the soild (16) is circulated with the plastics parts (5).

10. Method according to at least one of Claims 1 to 9, **characterized in that**, after the paint remover (13, 14) has acted and/or has been absorbed by the solid (16) the plastics parts (5) are dried, preferably by air classification.

11. Method according to at least one of Claims 1 to 10, **characterized in that**, after the paint remover (13, 14) has acted and/or has been absorbed by the solid (16) the paint (22) is removed from the plastics parts (5) by striking.

12. Method according to at least one of Claims 1 to 11, **characterized in that** the solid (16) is separated from the paint particles (22) and/or from the paint-stripped plastics parts (5'), preferably by sieving.

13. Method according to at least one of Claims 1 to 12, **characterized in that** the solid (16) laden with the paint remover (13, 14) is heated to a temperature of at least 70°C, preferably at least 100°C, but below the plastication temperature of the plastics parts (5), and the vapour emerging from the solid (16) is condensed in order to recover at least part of the paint remover (13, 14), the energy introduced when removing the paint (22) from the plastics parts (5) by striking preferably being utilized for heating the solid (16), and the solid (16) preferably being heated by a heat pump (34) fed by the heat of the paint-stripped plastics parts (5').

14. Method according to Claim 13, **characterized in that** the solid (16) laden with the paint remover (13, 14) is passed to a countercurrent heat exchanger (31) with secondary-side heating (32), the vapour flowing out from the heated solid (16) being pumped off and condensed.

## Revendications

1. Procédé de décapage de corps (2) en matière synthétique dotés de couches de peinture, dans lequel le corps (2) en matière synthétique est déchiqueté en particules (5) d'une taille qui permet de les déverser et est ensuite mis à réagir avec un agent de décapage (13, 14) qui diminue l'adhérence des couches de peinture et est brassé avec ce dernier, **caractérisé en ce que** lorsque l'action de l'agent de décapage (13, 14) est terminée, on ajoute aux particules peintes (5) de matière synthétique un solide (16) poudreux qui absorbe l'agent de décapage (13, 14).

2. Procédé selon la revendication 1, **caractérisé en ce que** l'agent de décapage (13, 14) contient une émulsion d'au moins un alcanol (13) benzylé, un acétate d'alkyle glycol et/ou une N-alkylpyrrolidone avec une lessive aqueuse (14) qui ne peut être mélangée complètement et dont le rapport de mélange est situé dans la plage d'une lacune de miscibilité.

3. Procédé selon la revendication 2, **caractérisé en ce que** l'émulsion (13, 14) contient de l'alcool benzylique (13), de l'acétate de butylglycol, de la N-méthylpyrrolidone et une lessive sodique (14) et/ou potassique.

4. Procédé selon au moins l'une des revendications 1 à 3, **caractérisé en ce qu'**après qu'il a agi sur les particules peintes (5) de matière synthétique, l'agent de décapage (13, 14) est neutralisé par addition d'un acide (15) et/ou d'une solution tampon aux particules (5) de matière synthétique.

5. Procédé selon au moins l'une des revendications 1 à 4, **caractérisé en ce que** le solide (16) présente une surface par unité de masse d'au moins 1 m²/g.

6. Procédé selon au moins l'une des revendications 1 à 5, **caractérisé en ce que** le solide (16) a une granulométrie moyenne d'au plus 20 µm et de préférence d'au plus 1 µm.

7. Procédé selon au moins l'une des revendications 1 à 6, **caractérisé en ce que** le solide (16) contient de l'acide silicique (16) précipité, du charbon actif, de la terre de diatomée, de la suie, de la poudre de talc et/ou de la poudre de calcaire.

8. Procédé selon au moins l'une des revendications 1 à 7, **caractérisé en ce que** l'addition de l'agent de décapage (13, 14) et du solide (16) aux particules peintes (5) de matière synthétique a lieu dans un récipient (8) fermé.

9. Procédé selon au moins l'une des revendications 1 à 8, **caractérisé en ce que** le solide (16) est brassé avec les particules (5) de matière synthétique.

10. Procédé selon au moins l'une des revendications 1 à 9, **caractérisé en ce qu'**après l'action de l'agent de décapage (13, 14) ou après l'absorption de ce dernier par le solide (16), les particules (5) de matière synthétique sont séchées de préférence par classification aéraulique.

11. Procédé selon au moins l'une des revendications 1 à 10, **caractérisé en ce qu'**après l'action de l'agent de décapage (13, 14) et/ou après l'absorption de ces derniers par le solide (16), la peinture (22) séparée des particules (5) de matière synthétique est séparée.

12. Procédé selon au moins l'une des revendications 1 à 11, **caractérisé en ce que** le solide (16) est séparé des particules de peinture (22) et/ou des particules décapées (5') de matière synthétique de préférence par tamisage.

13. Procédé selon au moins l'une des revendications 1 à 12, **caractérisé en ce que** le solide (16) chargé en agent de décapage (13, 14) est chauffé à une température d'au moins 70°C et de préférence d'au moins 100°C mais en dessous de la température de plastification des particules (5) de matière synthétique, la vapeur qui se dégage du solide (16) étant condensée pour récupérer au moins une partie de l'agent de décapage (13, 14), et l'énergie apportée pour séparer la peinture (22) des particules (5) de matière synthétique est de préférence utilisée pour chauffer le solide (16), le solide (16) étant de préférence chauffé par une pompe à chaleur (34) qui est alimentée par la chaleur des particules décapées (5') de matière synthétique.

14. Procédé selon la revendication 13, **caractérisé en ce que** le solide (16) chargé en agent de décapage (13, 14) est apporté à un échangeur de chaleur (31) à contre-courant et chauffage (32) sur le côté secondaire, la vapeur qui s'échappe du solide (16) chauffé étant extraite par pompage et condensée.
